# FASCICULE DE BREVET EUROPEEN

(11) **EP 2 258 822 B1**
(45) Date de publication et mention de la délivrance du brevet: **20.03.2013**
(21) Numéro de dépôt: 10290292.1
(22) Date de dépôt: 03.06.2010
(51) Int. Cl.: C12C 1/02, C12C 1/027, C12C 1/10, C12C 1/15

(54) **Installation de malterie, et procédé correspondant**
Mälzanlage und entsprechendes Verfahren
Malt house apparatus and corresponding method

(30) Priorité: 04.06.2009 FR 0902699
(43) Date de publication de la demande: 08.12.2010
(73) Titulaire: Malteurop Groupe, 51100 Reims (FR)
(72) Inventeur: Julien, Denis, 51360 Beaumont sur Vesle (FR)
(74) Mandataire: de Kernier, Gabriel

(56) Documents cités:
- DE-A1- 2 654 758
- DE-B- 1 290 110
- GB-A- 516 306
- GB-A- 783 226
- GB-A- 923 436
- GB-A- 1 487 824
- GB-A- 191 117 145
- US-A- 2 654 691
- US-A- 4 277 505

## Description

L'invention concerne le domaine technique de la malterie.

Il s'agit de reproduire le développement naturel de germination d'une céréale, afin que celle-ci développe certains enzymes (notamment l'amylase, la protéase). Comme céréale on utilise généralement de l'orge, ou encore du seigle, du blé, du sorgho ou de l'épeautre. Le maltage comprend le traitement de la céréale par une succession d'opérations (notamment : trempage - germination - touraillage - dégermage), après quoi on obtient du malt. Il existe de gros besoins en malt de différentes propriétés et qualités, notamment pour la brasserie.

Les principes généraux du maltage sont quasi ancestraux. On en trouve une synthèse dans l'ouvrage "Malterie et brasserie", de Jean SUNIER, 2ème édition, imprimerie La Concorde, Lausanne, 1968, ou encore dans sa réédition plus récente sous le nouveau titre "La Fabrication de la bière", Alliage éditeur, 26 septembre 2007, ISBN-13 No 978-2921327602.

Aujourd'hui, le maltage est industriel, et réalisé de plus en plus dans des installations appelées malteries. L'un des buts d'une malterie est de mettre en place une installation automatisée qui procure un excellent rendement en termes qualitatifs, tout en cherchant à réduire les nombreux coûts d'investissement et de fonctionnement de cette industrie: emprise de terrain, génie civil de construction, besoins en énergie, notamment.

De façon générale, une telle installation peut comporter au moins un outil de trempage, au moins un germoir et au moins une touraille, avec un système de transport de l'un à l'autre, dans l'ordre.

Des installations de malterie sont divulguées dans GB 1 487 824, GB 17 145, GB 783 226, GB 516 306, US 2 654 691 et US 4 277 505.

Selon un premier aspect de l'invention, l'installation comprend un bâtiment à deux corps. Un premier corps loge des germoirs allongés, au bout desquels sont montés les trempeurs. Le second corps, adjacent à l'un des germoirs allongés, comprend au moins une touraille. Ceci réduit les besoins en espace au sol.

Selon un autre aspect de l'invention, le système de transport comprend un premier convoyeur transversal opératoire soit avec la sortie des trempeurs soit avec celle de convoyeurs de sortie de germoirs, placés sous ceux-ci selon leur grande dimension. Ce premier convoyeur transversal est suivi d'un convoyeur ascensionnel placé entre le premier et le second corps du bâtiment. Et la sortie du convoyeur ascensionnel est commutable pour aller soit vers un convoyeur d'alimentation des germoirs, pour des grains issus du trempage, soit vers la ou les tourailles, pour des grains issus d'un germoir.

Ceci procure un système de transport particulièrement efficace et compact.

L'alternative soit... soit... signifie l'existence de deux positions de travail possible dans un même système.

D'autres caractéristiques et avantages de l'invention apparaîtront à l'examen de la description détaillée ci-après, et des dessins annexés, sur lesquels :
- la figure 1 est, en vue de dessus, un schéma d'implantation pour un mode de réalisation particulier d'une installation selon l'invention,
- la figure 2 est, en vue perspective, un schéma de principe de l'implantation des convoyeurs,
- la figure 3 est, en vue de dessus, un schéma d'implantation pour un mode de réalisation particulier d'une touraille, charpente et toiture omises,
- la figure 4 est, en coupe selon IV-IV de la figure 3, un schéma d'implantation pour un mode de réalisation particulier d'une touraille,
- la figure 5 est, en coupe selon V-V de la figure 4, un schéma d'implantation pour un mode de réalisation particulier d'une touraille,
- la figure 6 est une vue en coupe selon VI-VI de la figure 1,
- la figure 7 est une vue en coupe selon VII-VII de la figure 1,
- la figure 8 est une vue en coupe selon VIII-VIII de la figure 1,
- la figure 9 est une vue en coupe selon IX-IX de la figure 1,
- la figure 10 est une vue en coupe selon X-X de la figure 1, et
- la figure 11 est une vue en coupe selon XI-XI de la figure 1.

Les dessins annexés pourront non seulement servir à compléter l'invention, mais aussi contribuer à sa définition, le cas échéant.

Il est fait référence aux ouvrages "Malterie et brasserie" et/ou "La Fabrication de la bière", déjà cités, pour acquérir au besoin une connaissance générale des installations de malterie. Le maltage réalisé en malterie fait appel à des techniques complexes, et les éléments connus de l'homme du métier ne seront pas décrits en détail ici, en dehors de ce qui est directement nécessaire.

La suite de la présente description est faite en référence à l'orge en tant que céréale.

Abstraction faite des tâches d'intendance comme le stockage des grains d'orge, le processus de maltage comprend au moins les étapes suivantes:
a) Un trempage des grains d'orge. Celui-ci peut se faire dans différentes sortes de cuves de trempage, que l'on appellera génériquement "outil de trempage".
b) La germination, qui s'effectue dans des germoirs susceptibles de plusieurs modes de réalisation, notamment en raison de leur forme, qui peut être circulaire, ou au contraire semblable à un rectangle allongé. Après cette étape l'orge est qualifiée de malt vert.
c) Le touraillage, qui est presque toujours fait dans un appareil de forme circulaire, car il s'agit de faire sécher l'orge sur une grille en le faisant traverser par de l'air chaud, tout en le retournant et/ou l'égalisant avec un bras radial. Après cette étape l'orge est qualifiée de malt.
d) Le dégermage, qui consiste à éliminer les radicelles de l'orge.

On donnera maintenant quelques indications générales typiques sur ces différentes étapes. Les grains de céréale sont tout d'abord soigneusement nettoyés. Le but principal du trempage est de porter le grain à une teneur en eau proche de 50 %, typiquement entre 40 et 45 %. Il est bon aussi de lui apporter de l'oxygène, de sorte que la germination soit tout juste initiée ou sur le point de l'être en sortie de trempage.

On utilise la trempe alternée ou discontinue, avec des alternances de période pendant lesquelles le grain est sous l'eau, et d'autres (de durée environ moitié) où le grain est à découvert.

La température de l'eau est typiquement de 12 à 15°C, voir 20°C avec alternance d'eau froide. Le maximum est autour de 35°C, où le grain risque de mourir. Différents additifs peuvent être prévus pour empêcher la fermentation et le développement de micro-organismes pendant le trempage.

La germination se fait en plaçant un lit de grains trempés sur une grille fine, traversée par un flux d'air sous température, pression et humidité contrôlées, avec brassage des grains à l'aide de vis sans fin verticales plongeant dans le lit, et entraînées par des moteurs, l'ensemble étant par exemple monté sur un chariot mobile qui parcourt le germoir. Ce chariot serait un bras pour un germoir circulaire. Pour un germoir rectangulaire, il s'agit d'un chariot mobile sur la longueur. Le mouvement des vis sans fin et la vitesse de déplacement du chariot sont sous contrôle.

On en vient maintenant au touraillage. Là aussi, cette opération s'effectue sur une grille, sur laquelle les grains sont posés. Il s'agit de les faire sécher pour stopper la germination, tout en gardant le mieux possible les propriétés désirées du malt. Comme son nom l'indique, le touraillage s'effectue en principe sur une plate-forme circulaire mise d'une grille traversée par de l'air chaud, également sous température, pression et humidité contrôlées. Un bras de niveau réglable verticalement peut être muni de vis sans fin plongeant dans le lit de grains, afin de tendre à l'homogénéiser verticalement ou d'une vis d'axe horizontal pour l'égalisation, le chargement et le déchargement, ou encore de pales fixes ou réglables. La vitesse de rotation de la ou des vis sans fin et le sens et la vitesse angulaire d'avancée du bras sont également contrôlées. Le temps de séjour des grains est également contrôlé.

En outre, un mécanisme de nettoyage de la chambre de ventilation peut être pourvu de goulottes sensiblement parallèles formant le fond de la chambre de ventilation, et de vis transporteuses montées dans les goulottes, les vis étant entraînées par le convoyeur dans un sens amenant des débris tombés dans une goulotte vers le convoyeur. Le convoyeur peut être monté traversant dans la chambre de ventilation pour évacuer lesdits débris lors d'un nettoyage de la chambre de ventilation. Le nettoyage comprend l'actionnement des vis transporteuses par le convoyeur dans un sens amenant des débris tombés dans une goulotte vers le convoyeur. Le convoyeur peut être actionné dans un sens pour le nettoyage et dans un autre sens pour la vidange des grains. Ceci réduit considérablement la durée et la pénibilité du nettoyage, notamment de la chambre de ventilation.

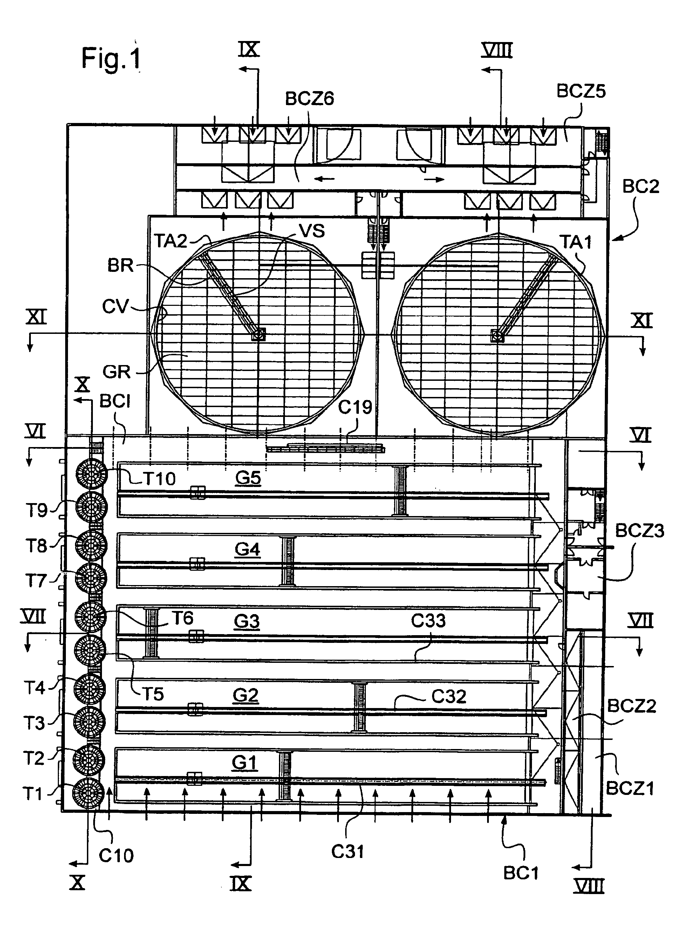

La figure 1 illustre un mode de réalisation des installations. Elle fait apparaître à droite un premier corps de bâtiment BC1, et à gauche un second corps de bâtiment BC2. Dans le corps de bâtiment BC1 sont implantés plusieurs, ici cinq, germoirs G1 à G5. Dans le même corps de bâtiment, en bout des germoirs, ici au-dessous, sont implantés plusieurs, ici dix, cuves de trempage TR1 à TR10. Ici, les cuves de trempage sont disposées par paire au bout de chacun des germoirs, d'où une réduction de la surface couverte, du nombre de bâtiments et la possibilité d'utiliser un même convoyeur pour déplacer le grain d'un outil de trempage vers un germoir et pour déplacer le malt vert d'un germoir vers une touraille, à des moments différents.

Dans le second corps de bâtiment BC2 sont prévus deux tourailles TA1 et TA2. On peut réutiliser de l'air de sortie d'une touraille dans la touraille voisine, d'où une réduction de la consommation d'énergie en chauffage et en ventilation. En outre, l'air de sortie de la deuxième touraille présente à certains moments de fonctionnement un taux de saturation en vapeur d'eau plus élevé d'où une capacité calorique accrue et une meilleure récupération d'énergie dans des échangeurs de chaleur.

Des zones de service sont prévues adjacentes à la partie supérieure du corps de bâtiment BC1, en BCZ1, BCZ2 et BCZ3. Les zones de service BCZ1, BCZ2 et BCZ3 servent essentiellement à préparer le fluide gazeux utilisé au germage.

D'autres zones de service sont prévues en BCZ5 et BCZ6. Elles servent essentiellement à récupérer le fluide gazeux utilisé au touraillage, qui traverse dans cet exemple la touraille de bas en haut. L'énergie de l'air chaud et humide de sortie de touraillage se voit donc récupérée vers la gauche de la figure 1 pour conditionner l'air d'entrée de touraillage. Une chaudière CD peut être prévue en plus de la récupération d'énergie. La chaudière CD peut être du type à biomasse, notamment à sous produits de malterie ou à copeaux de bois, d'où un bilan très avantageux d'émission de CO₂.

Des installations de sous-sols, non représentées, permettent d'élaborer l'atmosphère gazeuse requise, d'une part, pour la germination, d'autre part, pour le touraillage, ainsi que l'air requis pour les cuves de trempage lors de phases de respiration du grain.

Sur la figure 1, on distingue un convoyeur double effet C 10 passant sous les cuves TR 1 à TR 10, ainsi que la trace d'un convoyeur C 19 sur lequel on reviendra.

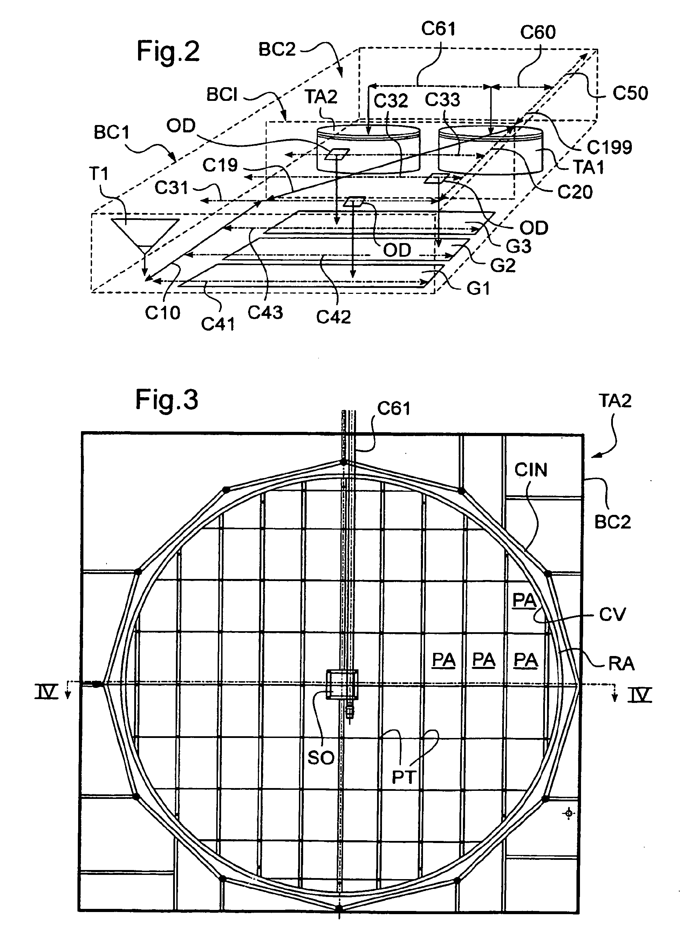

Il est maintenant fait référence à la figure 2, qui un schéma en perspective illustrant le cheminement des différents convoyeurs dans l'installation.

La disposition du bâtiment est définie sur la figure 2 par un trait pointillé fin et serré. On distingue à l'avant le corps de bâtiment BC 1 abritant les germoirs et les cuves de trempage, et à l'arrière le corps de bâtiment BC2 abritant les tourailles. Entre ceux-ci apparaît une cloison verticale BCI, qui délimite les deux corps de bâtiment BC 1 et BC2.

Pour simplifier, une seule cuve de trempage TR1 est représentée, et de même seuls trois germoirs G 1 à G3 sont représentés, au lieu des cinq de la figure 1.

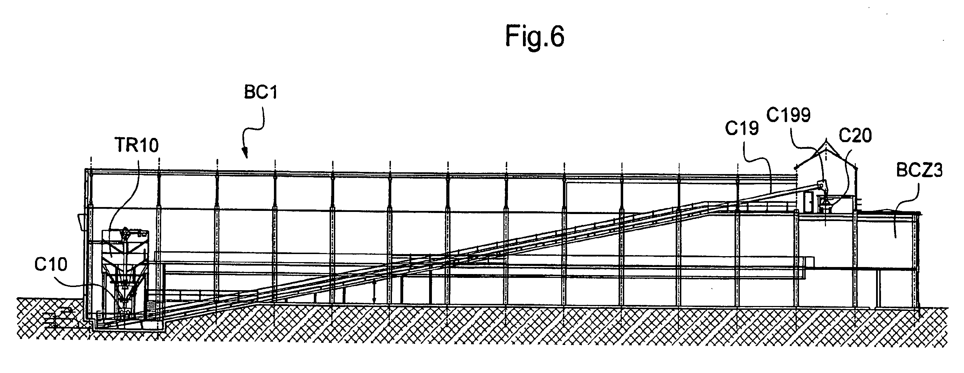

Le convoyeur C10 passe sous les cuves de trempage telles que TR1, pour rejoindre la partie basse du convoyeur C19. Le convoyeur C19 est un convoyeur ascensionnel situé près de la cloison BCI, voir figure 6. Le convoyeur C 19 est installé entre les tourailles TA1 et TA2 et les germoirs, dans le corps de bâtiment BC1. Le convoyeur C19 peut être incliné d'environ 10 à 20°. A son extrémité supérieure C199, le convoyeur C19 peut desservir soit le convoyeur C20, soit le convoyeur C50, tous deux étant sensiblement horizontaux en partie haute des corps de bâtiment BC1 et BC2, respectivement. Passant sous les cuves de trempage, le convoyeur C10 peut recevoir les grains trempés.

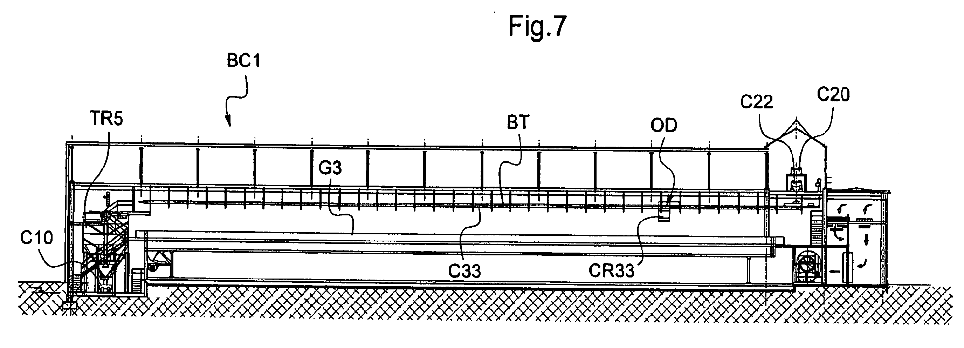

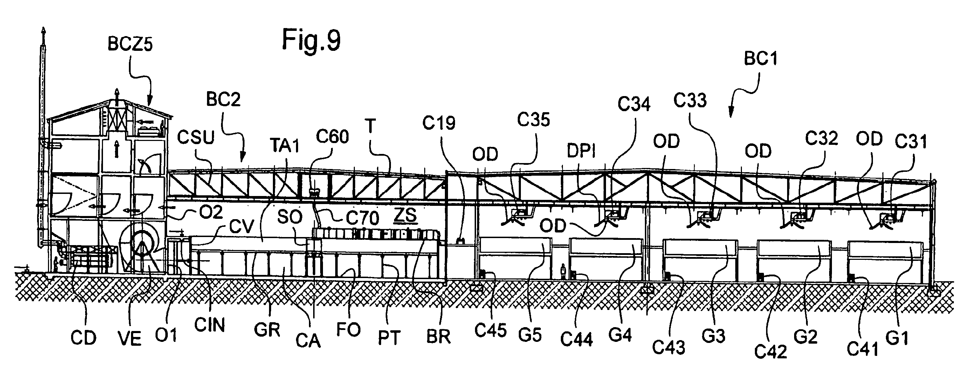

Du convoyeur C20, il part trois convoyeurs C31, C32 et C33, perpendiculaires au convoyeur C20. Les convoyeurs C31, C32 et C33 sont respectivement situés au-dessus des germoirs G1 à G3, sensiblement dans leur plan de symétrie longitudinale. La flèche C319 située à l'extrémité gauche du convoyeur C31 indique le grain trempé peut se déverser dans germoir G1. En fait, ce déversement peut se faire de manière commandée en n'importe quelle position du convoyeur C31 au-dessus du germoir G1, de sorte que l'on puisse remplir celui-ci de grains de manière sensiblement régulière. Les convoyeurs perpendiculaires C31, C32 et C33 sont munis d'un organe de déversement OD des grains. Chaque organe de déversement OD peut comprendre un chariot CR31, CR32 et CR33. Le chariot CR31, CR32 et CR33 est disposé le long du convoyeur correspondant et peut se déplacer continument ou entre des positions de travail prédéfinies. Le chariot CR31, CR32 et CR33 comprend des rouleaux inversant la concavité de la bande BT du convoyeur vue en section transversale, faisant ainsi tomber le grain, voir figure 7. En d'autres termes, la bande présente en section courante une concavité vers le haut en forme de χ, et au niveau du chariot une concavité vers le bas en forme de 1. En outre, le chariot CR31, CR32 et CR33 peut comprendre un double pan incliné DPI en forme générale d'accent circonflexe conférant au mouvement des grains une composante horizontale selon un axe transversal aux germoirs G1 à G5 lors de la chute des grains dans le germoir, voir figure 9. L'étalement des grains en est facilité sur la largeur des germoirs G1 à G5. Il en résulte un gain de temps lors de la finition de l'étalement, d'où une productivité plus élevée.

Plus précisément, le convoyeur C20 comprend une sortie disposée sensiblement à mi distance entre les germoirs d'extrémité G1 et G5, au dessus du germoir central dans le cas d'un nombre impair de germoirs, ou au dessus de la séparation entre deux germoirs dans le cas d'un nombre pair de germoirs. La sortie du convoyeur C20 débouche sur un convoyeur C22. Le convoyeur C22 est disposé parallèlement au convoyeur C20 et en dessous. Le convoyeur C22 est sensiblement parallèle à la largeur des germoirs G1 à G5. Le convoyeur C22 est déplaçable en translation selon sa longueur, par exemple au moyen de rouleaux en contact avec un ou deux rails. Les rouleaux peuvent être d'axes stationnaires et le rail solidaire du convoyeur C22 ou les rouleaux peuvent être d'axes solidaires du convoyeur C22 et le rail RI stationnaire. Le convoyeur C22 est déplaçable à la main ou de façon commandée par un actionneur, par exemple un treuil électrique à câble et renvoi en vue d'un double effet.

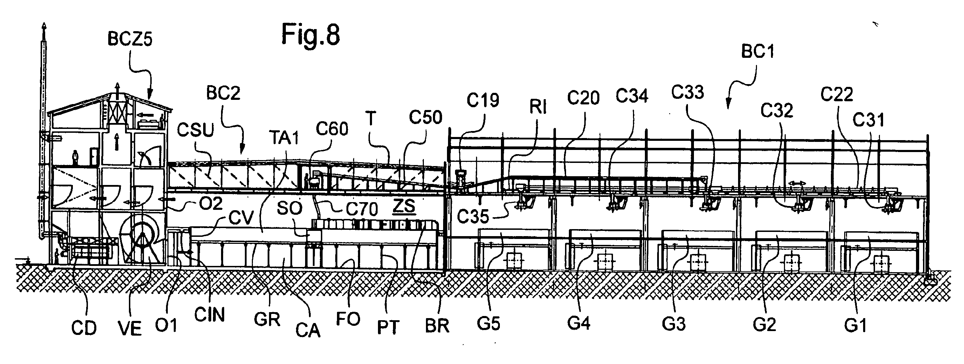

Le convoyeur C22 est à deux sens de rotation. Dans la position de la figure 8, le convoyeur C22 peut alimenter le convoyeur C31 en tournant dans un premier sens, vers la droite. Dans une position décalée d'une largeur de germoir, le convoyeur C22 peut alimenter le convoyeur C32 en tournant dans le premier sens, ou le convoyeur C34 en tournant dans l'autre sens. Dans une position décalée de deux largeurs de germoir, le convoyeur C22 peut alimenter le convoyeur C35 en tournant dans l'autre sens. Dans une position extrême décalée de plus de deux largeurs de germoir, le convoyeur C20 peut alimenter le convoyeur C33 directement, le convoyeur C22 étant effacé hors de la trajectoire de chute des grains trempés tombant du convoyeur C20.

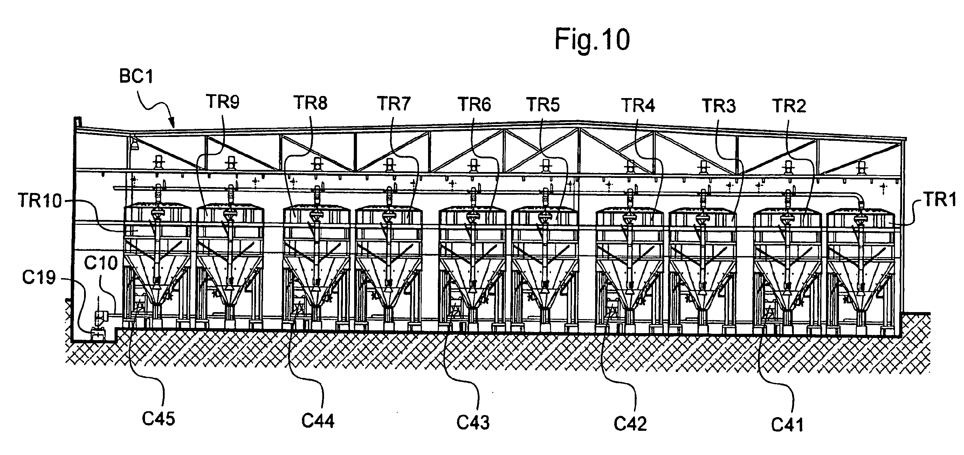

Le vidage des germoirs s'effectue par le bas. Les grains germés sont repris par des convoyeurs C41 à C45 de vidange de germoir, pour les germoirs G1 à G5 respectivement. Les convoyeurs C41 à C45 sont sensiblement horizontaux. Les convoyeurs C41 à C45 sont disposés sous les germoirs selon leur longueur. Les convoyeurs C41 à C45 débouchent sous les cuves de trempage, par exemple TR2, TR4, TR6, TR8 et TR10. La sortie des convoyeurs C41 à C45 est alignée avec la sortie des cuves de trempage TR1 à TR10. Le convoyeur C10 est disposé sous les sorties des convoyeurs C41 à C45 et sous les sorties des cuves de trempage TR1 à TR10 pour recueillir les grains germés dans une phase de fonctionnement et les grains trempés dans une autre phase de fonctionnement. Les cuves de trempage TR1 à TR10 comprennent une partie supérieure de révolution et une partie inférieure tronconique, les sorties des convoyeurs C41 à C45 de vidange de germoir étant adjacentes aux parties inférieures des cuves de trempage TR 1 à TR 10, voir figure 10.

A leur extrémité gauche, les convoyeurs C41 à C43 rejoignent le convoyeur C10 déjà cité. Les grains germés sont transportés par ce convoyeur C10 jusqu'au convoyeur ascensionnel C19, pour retrouver cette fois le convoyeur supérieur C50, lequel est suivi d'un convoyeur perpendiculaire horizontal C60, pour alimenter la touraille TA1, sensiblement en son centre. Le convoyeur C20 et le convoyeur C50 sont sensiblement alignés dans un plan vertical et de sens opposés. En d'autres termes, les entrées des convoyeurs C20 et C50 sont voisines et leurs sorties éloignées l'une de l'autre pour emmener respectivement les grains trempés en direction des germoirs et les grains germés en direction des tourailles. Les convoyeurs C20 et C50 peuvent être légèrement inclinés pour permettre de réduire la pente du convoyeur ascensionnel C19 à longueur égale du bâtiment BC1. La commutation entre le convoyeur C20 et le convoyeur C50 peut être effectuée au moyen d'un volet pivotant entre deux positions, par exemple par un actionneur. En sortie du convoyeur C60, le grain peut également être repris par le convoyeur C61 pour alimenter la touraille TA2, sensiblement en son centre, au lieu de la touraille TA1. Un volet peut être prévu pour diriger le grain tombant du convoyeur C60 vers la conduite C70 dans une position, vers le convoyeur C61 dans une autre position.

Le schéma de principe qui précède comporte différentes jonctions et commutations de convoyeurs, sur lesquelles on reviendra par la suite. Dans le mode de réalisation représenté, les tourailles TA1 et TA2 comprennent une grille. Alternativement, les tourailles peuvent comprendre une pluralité de grilles superposées avec un mécanisme de descente des grains d'une grille vers une grille d'un niveau inférieur.

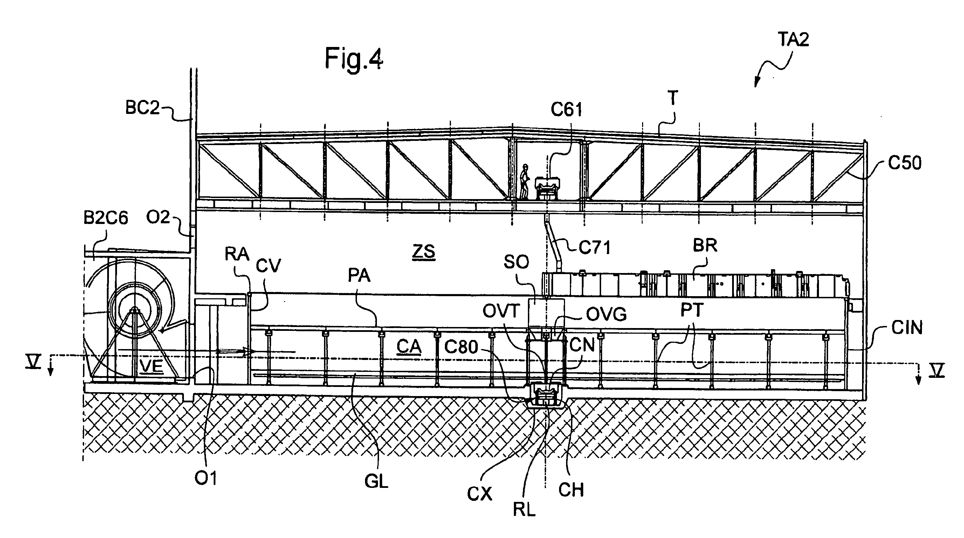

Dans le mode de réalisation des figures 3 à 5, la touraille TA2 disposée dans le bâtiment BC2 comprend une charpente intérieure CIN définissant un espace sensiblement cylindrique polygonal régulier d'axe vertical et une cuve CV disposée dans la charpente intérieure CIN. La cuve CV est disposée au dessus du fond FO du bâtiment BC2. Une grille GR ou plateau est disposée dans la cuve CV et en forme le fond. Une chambre de ventilation CA est délimitée verticalement entre le fond FO et le grille GR de la cuve CV et latéralement par la charpente intérieure CIN. La grille GR est sensiblement horizontale. La grille GR comprend une pluralité de panneaux de forme générale rectangulaire. Chaque panneau est muni d'ouvertures allongées configurées pour laisser passer l'air en retenant le grain. Les panneaux PA peuvent être formés à partir d'une tôle perforée ou à partir de barreaux, par exemple de barreaux soudés se croisant perpendiculairement. La touraille TA2 est alimentée par le convoyeur C60 et le convoyeur C61. Une extrémité du convoyeur C61 est disposée au dessus de la cuve CV.

Le grain apporté par le convoyeur C61 descend par une conduite C71 pour atteindre la grille GR à proximité du centre de la touraille TA2. Un bras rotatif BR est disposé dans la touraille TA2 au-dessus de la grille GR. Le bras BR est monté à rotation autour d'un axe vertical passant par le centre de la touraille TA2. La longueur du bras BR est très légèrement supérieure au rayon de la touraille TA2. Le bras BR est supporté au centre de la touraille TA2 par un socle SO reposant sur le sol par l'intermédiaire de poteaux PT. Les poteaux PT servent également à supporter la grille GR. L'extrémité opposée du bras BR repose sur un rail circulaire RA disposé autour de la grille GR.

Le bras BR est muni d'organes de répartition du grain permettant d'en disposer une épaisseur sensiblement régulière sur la grille GR, par exemple une vis sans fin VS d'axe sensiblement horizontal. Le bras BR supporte la vis radiale VS, voir figure 1. Plus précisément, le grain est déversé à proximité du socle SO par la conduite C71, puis étalé vers l'extérieur par les organes de répartition lors de la rotation du bras BR. Le bras BR est déplaçable en hauteur pour tenir compte de l'épaisseur de la couche de grains notamment.

Les organes de répartition du grain peuvent comprendre des lames fixes par rapport au bras ou des mélangeurs motorisés, par exemple sous la forme de lames ou de vis rotatives, permettant de remuer le grain reposant sur la grille GR et de le répartir en épaisseur sensiblement uniforme. Les éléments de répartition supportés par le bras BR peuvent également être orientables entre une position de répartition homogène du grain lors du remplissage de la touraille et une position d'évacuation pour ramener le grain vers la sortie après que l'étape de touraillage a été effectuée.

Au-dessus de la touraille TA2, est installée une charpente supérieure CSU supportant la toiture T et les convoyeurs C60 et C61 disposés sous la toiture T. Les convoyeurs C60 et C61 peuvent être disposés dans un passage planchéié offrant un accès aux opérateurs. Le convoyeur C60 peut être incliné pour reprendre les grains sous la sortie du convoyeur C50 et les amener au dessus de l'entrée du convoyeur C61 avec une hauteur de chute suffisante pour y disposer un volet de commutation. Le convoyeur C61 peut être sensiblement horizontal.

Le touraillage proprement dit est effectué par une circulation d'air chaud, à température, humidité, pression et débit contrôlés. A cet effet, au moins un ou deux ventilateurs VE, par exemple de type centrifuge, sont installés au voisinage du bâtiment BC2 dans la zone de service BCZ6. Le ventilateur VE reçoit de l'air chauffé et humidifié, éventuellement additionné de composés de traitement du grain, par exemple pour éviter le développement de substances indésirables dans le grain. Le ventilateur VE débouche sous la grille GR par une ouverture O1 ménagée dans le mur du bâtiment BC2. L'air circule du ventilateur VE vers la zone inférieure ou chambre de ventilation CA de la touraille TA2, traverse la grille GR, traverse la couche de grain reposant sur la grille GR passe dans une zone supérieure ZS de la touraille TA2 au dessus de la cuve CV, puis est évacué par une ouverture 02 ménagée dans une partie supérieure du mur du bâtiment BC2. En sortie, l'air peut être relâché dans l'atmosphère, éventuellement après récupération d'énergie, par exemple par un échangeur de chaleur, ou envoyé vers la touraille TA1. Le ventilateur VE est à débit commandé permettant ainsi une excellente adaptation à la nature du grain et à l'évolution du grain au cours du touraillage.

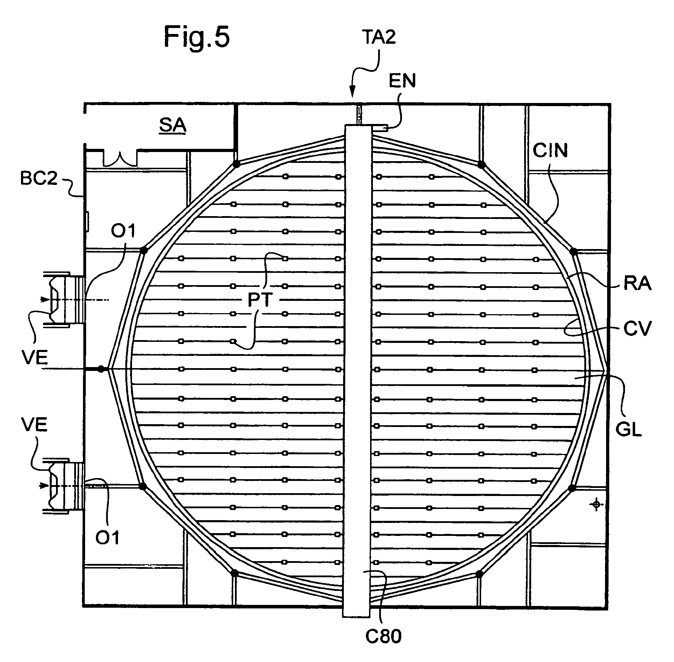

Un convoyeur C80 est disposé dans la chambre de ventilation CA de la touraille TA2 pour l'évacuation du grain après l'étape de touraillage. Le convoyeur C80 présente une longueur supérieure au diamètre de la touraille TA2, voir figure 5. En d'autres termes, les extrémités du convoyeur C80 disposées diamétralement dans la touraille TA2 sont disposées à l'extérieur de la touraille TA2 et de la charpente intérieure CIN. Le convoyeur C60 comprend une chaîne transporteuse CN sans fin, par exemple en acier inoxydable avec racleurs en matériau synthétique, un châssis CH par exemple à base d'acier inoxydable, des rouleaux RL pour la course de retour, et un entraînement EN.

L'entraînement EN peut comprendre un moteur électrique en prise directe avec un rouleau d'extrémité de la chaîne transporteuse ou par l'intermédiaire d'un réducteur. L'entraînement EN est disposé à une extrémité du convoyeur C80 en dehors de la touraille TA2. L'entraînement EN est ainsi aisément accessible aux opérateurs, y compris pendant l'opération de touraillage, d'où une surveillance et une maintenance aisées. Par ailleurs, l'entraînement EN extérieur à la touraille TA2 peut être optimisé en vue d'une fiabilité élevée et/ou d'une consommation d'énergie faible au lieu d'être optimisée en vue de satisfaire aux exigences des normes relatives aux atmosphères explosives obligatoires à l'intérieur de la touraille TA2. En outre, les rouleaux d'extrémité soumis à l'effort de tension de la bande transporteuse, subissent une usure et présentent un risque d'échauffement supérieur à ceux des rouleaux courants supportant la chaîne transporteuse. La disposition des rouleaux d'extrémités hors de la touraille TA2 permet également une surveillance et une maintenance aisées.

La touraille TA2 peut comprendre un convoyeur disposé sous la chambre de ventilation pour recueillir les grains germés lors du déchargement de la cuve par ledit orifice de déchargement.

La cuve CV peut être munie d'un orifice de déchargement OVG. La vidange des grains après l'étape de touraillage peut alors être assurée par l'ouverture de l'orifice de vidange OVG. L'orifice de vidange OVG peut être muni d'une trappe diamétrale ou radiale, d'une pluralité de trappes allongées disposées dans la grille GR au-dessus du convoyeur C80, ou d'une trappe centrale proche du socle SO. L'actionnement du bras BR en rotation et le positionnement des organes de répartition des grains en position de vidange peut progressivement ramener le grain vers la ou les trappes ouvertes et ainsi vider la touraille TA2 en dégageant la grille GR. Le bras BR assure une double fonction de mélange/répartition et de vidange.

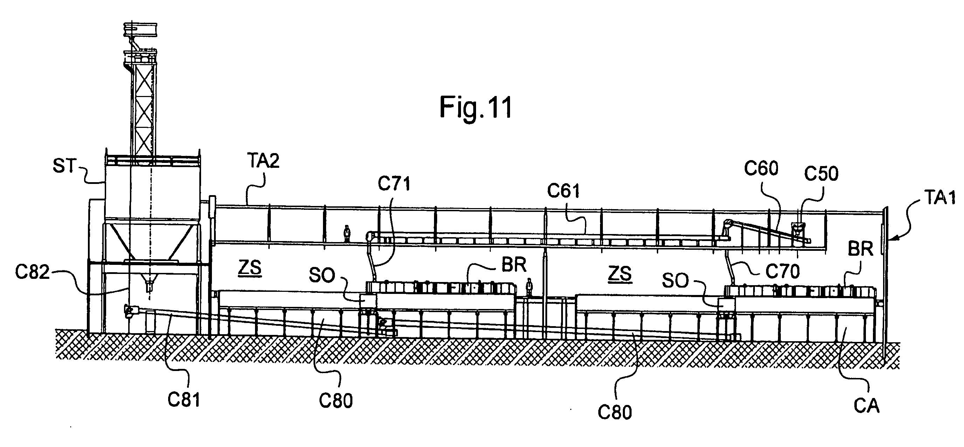

Dans le mode de réalisation de la figure 11, le convoyeur C80 est légèrement incliné et s'étend sensiblement du centre de la touraille TA1 au centre de la touraille TA2. La sortie du convoyeur C80 est située au dessus de l'entrée d'un convoyeur C81. Le convoyeur C81 s'étend sensiblement du centre de la touraille TA2 jusqu'à l'extérieur de la touraille TA2. Les convoyeurs C80 et C81 sont alignés. Dans une alternative, les convoyeurs C80 et C81 sont remplacés par un convoyeur unique de grande longueur. Le convoyeur C81 peut déboucher dans un convoyeur ascensionnel C82, par exemple sensiblement vertical, de remontée du malt dans un stockage ST.

De façon générale, un convoyeur comprend une bande transporteuse en matériau synthétique, supportée par des rouleaux de support tant pour l'aller que pour le retour, tendue entre des rouleaux d'extrémité et entraînée par un moteur agissant sur l'un des rouleaux d'extrémité. Les rouleaux de support de l'aller sont disposés en creux avec une portion centrale horizontale et deux portions latérales relevées de façon que la bande présente une concavité orientée vers le haut pour transporter

Le convoyeur ascensionnel peut être disposé entre les germoirs et la ou les tourailles sur la longueur des germoirs. Le convoyeur d'alimentation des germoirs et un convoyeur d'alimentation de la ou des tourailles peuvent être alignés de façon opposée. Les convoyeurs de sortie de germoir peuvent comprendre une sortie disposée sous les outils de trempage. L'installation peut comprendre un premier convoyeur d'alimentation des tourailles suivi par un second convoyeur d'alimentation des tourailles, ledit second convoyeur étant à sortie commutable entre une première touraille et un convoyeur d'alimentation de la seconde touraille. L'installation peut comprendre une conduite disposée entre la sortie du second convoyeur et dirigée vers le bas, et une conduite disposée entre la sortie du convoyeur d'alimentation de la seconde touraille et dirigée vers le bas, pour amener les grains à proximité du centre de chaque touraille, chaque touraille comprenant un bras répartiteur pour étaler les grains en une couche d'épaisseur régulière. Le convoyeur d'alimentation des germoirs peut comprendre une sortie disposée à mi-distance entre les germoirs d'extrémité, l'installation comprenant un convoyeur mobile d'alimentation des germoirs disposé sous ladite sortie et mobile entre au moins une position d'alimentation pour chaque germoir. L'installation de malterie peut comprendre un convoyeur mobile d'alimentation des germoirs disposé sous une sortie d'un convoyeur fixe d'alimentation des germoirs et mobile par translation entre au moins une position d'alimentation pour chaque germoir. Le convoyeur mobile peut être disposé transversalement, à une extrémité des germoirs. Le convoyeur mobile peut être à deux sens de convoyage. L'installation de malterie peut comprendre un convoyeur longitudinal d'alimentation pour chaque germoir, disposé sous une sortie d'un convoyeur d'alimentation des germoirs, ledit convoyeur longitudinal s'étendant au moins sur la longueur de chaque germoir, et étant muni d'un organe de déversement des grains capable de répartir les grains dans le germoir. L'organe de déversement des grains peut comprendre un chariot mobile sur la longueur du germoir et capable d'inverser la concavité d'une bande transporteuse du convoyeur longitudinal. L'organe de déversement des grains peut comprendre un pan incliné de répartition des grains sur la largeur du germoir. L'organe de déversement des grains peut être actif au moins en une pluralité de positions longitudinales pour la répartition des grains sur la longueur du germoir.

L'invention ne se limite pas aux exemples de procédé et installations (ou éléments d'installation) décrits ci-avant, seulement à titre d'exemple, mais elle englobe toutes les variantes que pourra envisager l'homme de l'art dans le cadre des revendications ci-après.

## Revendications

1. Installation de malterie, du type comprenant au moins un outil de trempage (TR1), au moins un germoir (G1) et au moins une touraille (TA1), avec un système de transport de l'un à l'autre, dans l'ordre, **caractérisée en ce qu'**elle comprend un bâtiment à deux corps, avec un premier corps (BC1) qui loge des germoirs allongés, au bout desquels sont montés les outils de trempage, et avec un second corps (BC2), adjacent à l'un des germoirs allongés, qui comprend au moins une touraille, et **en ce que** le système de transport comprend un premier convoyeur transversal (C10) opératoire soit avec la sortie de l'outil de trempage, soit avec celle de convoyeurs de sortie (C41) de germoirs, placés sous lesdits germoirs selon leur grande dimension, ledit premier convoyeur transversal (C10) étant suivi d'un convoyeur ascensionnel (C 19) placé entre le premier et le second corps du bâtiment, tandis que la sortie du convoyeur ascensionnel (C 19) est commutable pour aller soit vers un convoyeur d'alimentation (C20) des germoirs, pour des grains issus du trempage, soit vers la ou les tourailles (TA1), pour des grains issus d'un germoir.

2. Installation de malterie selon la revendication 1, dans laquelle le convoyeur ascensionnel (C 19) est disposé entre les germoirs (G1) et la ou les tourailles (TA1), sur la longueur des germoirs.

3. Installation de malterie selon l'une des revendications précédentes, dans laquelle le convoyeur d'alimentation (C20) des germoirs et un convoyeur d'alimentation (C50) de la ou des tourailles sont alignés de façon opposés.

4. Installation de malterie selon l'une des revendications précédentes, dans laquelle les convoyeurs (C41) de sortie de germoirs comprennent une sortie disposée sous les outils de trempage (TR1).

5. Installation de malterie selon l'une des revendications précédentes, comprenant un premier convoyeur d'alimentation (C50) des tourailles suivi par un second convoyeur d'alimentation (C60) des tourailles, ledit second convoyeur étant à sortie commutable entre une première touraille (TA1) et un convoyeur d'alimentation (C61) de la seconde touraille.

6. Installation de malterie selon la revendication précédente, comprenant une conduite (C70) disposée entre la sortie du second convoyeur (C60) et dirigée vers le bas et une conduite (C71) disposée entre la sortie du convoyeur d'alimentation (C61) de la seconde touraille et dirigée vers le bas, pour amener les grains à proximité du centre de chaque touraille, chaque touraille comprenant un bras répartiteur (BR) pour étaler les grains en une couche d'épaisseur régulière.

7. Installation de malterie selon l'une des revendications précédentes, dans laquelle le convoyeur d'alimentation (C20) des germoirs comprend une sortie disposée à mi-distance entre les germoirs d'extrémité, l'installation comprenant un convoyeur mobile (C22) d'alimentation des germoirs disposé sous ladite sortie et mobile entre au moins une position d'alimentation pour chaque germoir.

8. Installation de malterie selon l'une des revendications précédentes, comprenant un convoyeur mobile (C22) d'alimentation des germoirs disposé sous une sortie d'un convoyeur fixe (C20) d'alimentation des germoirs et mobile par translation entre au moins une position d'alimentation pour chaque germoir.

9. Installation de malterie selon la revendication précédente, dans laquelle le convoyeur mobile (C22) est disposé transversalement, à une extrémité des germoirs.

10. Installation de malterie selon l'une des revendications 7 à 9, dans laquelle le convoyeur mobile (C22) est à deux sens de convoyage.

11. Installation de malterie selon l'une des revendications précédentes, comprenant un convoyeur longitudinal (C31) d'alimentation pour chaque germoir, disposé sous une sortie d'un convoyeur (C20, C22) d'alimentation des germoirs, ledit convoyeur longitudinal (C31) s'étendant au moins sur la longueur de chaque germoir, et étant muni d'un organe de déversement (OD) des grains capable de répartir les grains dans le germoir.

12. Installation de malterie selon la revendication précédente, dans laquelle l'organe de déversement (OD) des grains comprend un chariot (CR31) mobile sur la longueur du germoir et capable d'inverser la concavité d'une bande transporteuse (BT) du convoyeur longitudinal.

13. Installation de malterie selon l'une des deux revendications précédentes, dans laquelle l'organe de déversement (OD) des grains comprend un pan incliné (DPI) de répartition des grains sur la largeur du germoir.

14. Installation de malterie selon l'une des trois revendications précédentes, dans laquelle l'organe de déversement (OD) des grains est actif au moins en une pluralité de positions longitudinales pour la répartition des grains sur la longueur du germoir.

## Claims

1. Malting installation, of the type comprising at least one dipping tool (TR1), at least one sprouter (G1) and at least one kiln (TA1), having a system of transportation from one to another, in sequence, **characterised in that** it comprises a two-part building, with a first part (BC1) housing the elongated sprouters, at the end of which are mounted the dipping tools, and a second part (BC2), adjacent to one of the elongated sprouters, which comprises at least one kiln, and **in that** the system of transportation comprises a first transverse conveyor (C10) operating either with the outlet of the dipping tool or that of the discharge conveyors (C41) from the sprouters, situated below the said sprouters and along their length, the said first transverse conveyor (C10) being followed by an ascending conveyor (C19), located between the first and the second parts of the building, while the outlet of the ascending conveyor (C19) can be switched, enabling it to lead either to a feed conveyor (C20) for the sprouters for the grains leaving the dipping stage, or towards the kiln or the kilns (TA1) for the grains leaving a sprouter.

2. Malting installation according to claim 1, in which the ascending conveyor (C19) is arranged between the sprouters (G1) and the kiln or kilns (TA1) along the length of the sprouters.

3. Malting installation according to either of the preceding claims, in which the feed conveyor (C20) from the sprouters and a feed conveyor (C50) from the kiln or kilns are aligned in an opposing manner.

4. Malting installation according to any of the preceding claims, in which the discharge conveyors (C41) from the sprouters comprise an outlet arranged below the dipping tools (TR1).

5. Malting installation according to any of the preceding claims comprising a first feed conveyor (C50) from the kilns, followed by a second feed conveyor (C60) from the kilns, the second conveyor having an outlet that can be switched between a first kiln (TA1) and a feed conveyor (61) from the second kiln.

6. Malting installation according to the preceding claim, comprising a conduit (C70) arranged between the outlet of the second conveyor (C60) and leading downwards and a conduit (C71) arranged between the outlet of the feed conveyor (C61) of the second kiln and leading downwards, to convey the grains into the vicinity of the centre of each kiln, with each kiln comprising a distributor arm (BR) enabling the grains to be spread in a layer of uniform height.

7. Malting installation according to any of the preceding claims, in which the feed conveyor (C20) from the kilns comprises an outlet arranged at a mid-distance between the end sprouters, with the installation comprising a mobile feed conveyor (C22) from the sprouters, which is arranged below the said outlet and is mobile between at least one feeding position for each sprouter.

8. Malting installation according to any of the preceding claims, comprising a mobile feed conveyor (C22) from the kilns, arranged below an outlet of a fixed feed conveyor (C20) from the sprouters, which is arranged below the said outlet and can be moved between at least one feeding position for each sprouter.

9. Malting installation according to the preceding claim, in which the mobile conveyor (C22) is arranged transversely at one end of the sprouters.

10. Malting installation according to the preceding claims 7 to 9, in which the mobile conveyor (C22) can convey in two directions.

11. Malting installation according to any of the preceding claims, comprising a longitudinal feed conveyor (C31) for each sprouter, arranged below an outlet of a feed conveyor (C20, C22) from the sprouters, with the said longitudinal conveyor (C31) extending at least along the length of each sprouter, and being equipped with a discharge system (OD) capable of spreading the grains within the sprouter.

12. Malting installation according to the preceding claim, in which the grain discharge system (OD) comprises a carriage (CR31), which can be moved along the length of the sprouter and is capable of reversing the concavity of a conveyor belt (BT) of the longitudinal conveyor.

13. Malting installation according to either of the two preceding claims, in which the grain discharge system (OD) comprises an inclined plane for the distribution of the grains across the width of the sprouter.

14. Malting installation according to any of the three preceding claims, in which the grain discharge system (OD) is active at least in a number of longitudinal positions for the distribution of the grains over the length of the sprouter.

## Patentansprüche

1. Mälzanlage von der Art, die mindestens eine Weicheinrichtung (TR1), mindestens eine Keimeinrichtung (G1) und mindestens eine Darre (TA1) aufweist, mit einem System zum Transport zwischen ihnen in dieser Reihenfolge, **dadurch gekennzeichnet dass** sie ein zweiteiliges Gebäude umfasst, mit einem ersten Gebäudeteil (BC1), der die langgestreckten Keimeinrichtungen aufnimmt, an deren Ende die Weicheinrichtungen angeordnet sind, und mit einem zweiten Gebäudeteil (BC2) angrenzend an eine der langgestreckten Keimeinrichtungen, die mindestens eine Darre aufnimmt, wobei das Transportsystem einen ersten Querförderer (C10) aufweist, der betrieblich mit dem Ausgang der Weicheinrichtung und mit dem der Austragförderer (C41) der Keimeinrichtungen zusammenarbeitet, die unter diesen Keimeinrichtungen ihrer großen Abmessung entsprechend angeordnet sind, wobei auf den ersten Querförderer (C10) ein ansteigender Förderer (C19) folgt, der zwischen dem ersten und dem zweiten Gebäudeteil angeordnet ist, während der Ausgang des aufsteigenden Förderers (C19) umschaltbar ist, um auf einen Speiseförderer (C20) für die Keimeinrichtungen zu laufen, der die aus dem Einweichen kommenden Körner heranführt, oder auf die Darre(n) (TA1) für die aus einer Keimeinrichtung kommenden Körner.

2. Mälzanlage nach Anspruch 1, bei der der aufsteigende Förderer (C19) zwischen den Keimeinrichtungen (G1) und der oder den Darren (TA1) über die Länge der Keimeinrichtungen verlaufend angeordnet ist.

3. Mälzanlage nach einem der vorgehenden Ansprüche, bei der der Speiseförderer (C20) der Keimeinrichtungen und ein Speiseförderer (C50) für die Darre(n) einander entgegengesetzt ausgerichtet sind.

4. Mälzanlage nach einem der vorgehenden Ansprüche, bei der die Austragförderer (C41) der Keimeinrichtungen einen Ausgang aufweisen, der unter den Weicheinrichtungen (TR1) angeordnet ist.

5. Mälzanlage nach einem der vorgehenden Ansprüche mit einem ersten Darren-Speiseförderer (C50), dem ein zweiter Darren-Speiseförderer (C60) folgt, wobei der zweite Förderer ausgangsseitig zwischen einer ersten Darre (TA1) und einem Speiseförderer (C61) der zweiten Darre umschaltbar ist.

6. Mälzanlage nach dem vorhergehenden Anspruch, mit einer abwärts gerichteten Leitung (C70) vom Ausgang des zweiten Förderers (C60) und einer abwärts gerichteten Leitung (C71) vom Ausgang des Speiseförderers (C61) der zweiten Darre her, um die Körner jeder Darre mittig zuzuführen, wobei jede Darre einen Verteilerarm (BR) aufweist, mit dem die Körner zu einer gleichmäßig dicken Schicht ausbreitbar sind.

7. Mälzanlage nach einem der vorhergehenden Ansprüche, in der der Speiseförderer (C20) der Keimeinrichtungen einen Ausgang in der Mitte zwischen den äußersten Keimeinrichtungen, wobei die Anlage einen verfahrbaren Förderer (C22) zur Speisung der Keimeinrichtungen aufweist, der unter dem genannten Ausgang liegt und zu mindestens einer Speiseposition für jede Keimeinrichtung verfahrbar ist.

8. Mälzanlage nach einem der vorhergehenden Ansprüche, mit einem verfahrbaren Förderer (C22) zur Speisung der Keimeinrichtungen, der unter einem Ausgang eines stationären Speiseförderers der Keimeinrichtungen angeordnet und translatorisch zwischen mindestens einer Speiseposition für jede Keimeinrichtung verfahrbar ist.

9. Mälzanlage nach dem vorhergehenden Anspruch, bei der der verfahrbare Förderer (C22) quer zu einem Außenende der Keimeinrichtungen verläuft.

10. Mälzanlage nach einem der Ansprüche 7 bis 9, bei der der verfahrbare Förderer (C22) für zwei Förderrichtungen ausgeführt ist.

11. Mälzanlage nach einem der vorhergehenden Ansprüche, mit einem längs verlaufenden Speiseförderer (C31) für jede Keimeinrichtung, der unter einem Ausgang eines Speiseförderers (C20, C21) für die Keimeinrichtungen verläuft, wobei der Längsförderer (C31) sich mindestens über die Länge jeder Keimeinrichtung erstreckt und ein Korn-Füllorgan (OD) aufweist, mit dem die Körner in der Keimeinrichtung verteilbar sind.

12. Mälzanlage nach dem vorhergehenden Anspruch, bei der das Korn-Füllorgan (OD) einen Schlitten (CR31) aufweist, der über die Länge der Keimeinrichtung verfahrbar ist und die Vertiefung eines Transportbandes (BT) des Längsförderers umkehren kann.

13. Mälzanlage nach einem der zwei vorhergehenden Ansprüche, bei der das Korn-Füllorgan (OD) ein schräg angeordnetes flächiges Element (DPI) aufweist, mit dem die Körner über die Breite der Keimeinrichtung verteilbar sind.

14. Mälzanlage nach einem der drei vorgehenden Ansprüche, bei der zum Verteilen der Körner längs der Keimeinrichtung das Korn-Füllorgan (OD) in mindestens mehreren Längsstellungen aktiv ist.
